# EUROPEAN PATENT SPECIFICATION

(11) **EP 3 967 383 B1**
(45) Date of publication and mention of the grant of the patent: **14.08.2024**
(21) Application number: 19928878.8
(22) Date of filing: 22.11.2019
(51) Int. Cl.: A63H 18/14, A63H 17/26, G09B 19/10

(54) **GAP COMPENSATION DEVICE FOR MODEL CAR**
ABSTANDSAUSGLEICHSVORRICHTUNG FÜR MODELLAUTO
DISPOSITIF DE COMPENSATION D'ESPACE POUR VOITURE MINIATURE

(30) Priority: 10.05.2019 KR 20190054788; 15.11.2019 KR 20190147038
(43) Date of publication of application: 16.03.2022
(73) Proprietor: Gil, Sang Chul, Gyeonggi-do 12942 (KR)
(72) Inventor: Gil, Sang Chul, Gyeonggi-do 12942 (KR)
(74) Representative: Fortuna, Jevgenijs
(86) International application number: PCT/KR2019/016081
(87) International publication number: WO 2020/230968

(56) References cited:
- EP-A1- 2 213 348
- DE-A1- 3 625 667
- DE-A1- 3 914 909
- DE-C1- 3 525 350
- JP-A- 2003 088 688
- KR-A- 20070 059 679
- KR-A- 20100 121 930
- KR-B1- 101 382 963
- US-A1- 2001 010 196

## Description

### Technical Field

The present invention relates to a clearance compensation device for a model car and more particularly, to a clearance compensation device for a model car mounted on the model car which can travel on a road of housing model exhibition and the like.

### Background Art

Generally, a model city or model town that is manufactured in a miniature has an advantage of intensively the scenery of a variety of specialty cities and villages, and has been used as exhibits in many exhibitions.

Recently, as a miniature manufacturing technique has been developed, a road is made in the miniature city and a miniature transport means (train, car, etc.) can travel on the road almost similarly to actual traveling, so that the interest of customers focuses on the exhibits.

In this regard, in the related art, a technique for a model traveling device for directing a model car to move on a road of a housing model exhibit has been known.

According to the related art, the model traveling device is configured by a panel which has one surface on which the model car is seated and has a runway formed so that the model car can travel, a belt which has a closed loop formed on the bottom surface of the panel to be movable along the runway and has a magnet provided on one side to contact the model car on the surface of the panel by a magnetic force to move the model car along the runway during moving, and a motor for applying the power to the belt.

Herein, the conventional model car applied to the model traveling device is formed in a car shape which has wheels to be movable along the runway, but an actual car is manufactured in a miniature shape to express a similar situation to actual traveling. Further, an attachment such as a iron or a magnetic body is attached to the lower surface of the model car to respond to the magnetic force of the magnet provided in the belt.

However, the conventional model car has a large deviation in a clearance between the bottom surface of the model car and one surface of the panel by a type of applied car, a design error, a process error, etc., and as a result, in the case of a model car in which a bottom surface is spaced apart from one surface of the panel so that the magnetic force of the magnet is not applied to the attachment, there is a problem that the traveling is impossible.

Further, even in a model car which can travel on a plane, the clearance between the attachment and the magnet is separated at a position where the road surface is dented when passing through an uneven zone, and as a result, the magnetic force of the magnet is not applied to the attachment, and there is problem that the model car stops during traveling.

Meanwhile, in the related art, in order to solve the problems, the thickness of the attachment attached to the bottom surface of the model car is increased to reduce the clearance between the attachment and the magnet, thereby increasing the magnetic force of the magnet applied to the attachment.

However, in this case, since the attachment is manufactured too thick, the attachment is not in contact with the ground, but the wheels of the model car are separated from one surface of the panel so that the wheels are not rotated and travel, or when the model car passes through the uneven zone, the attachment is caught at the position where the road surface protrudes, and as a result, there is a problem that the model car stops during traveling.

For instance, there is known a system for moving toy vehicles on a toy track (DE 3625667 A1), disclosing a conveyor system designed for moving non-motorized toy vehicles on a toy train track. The system comprises a guide, installed beneath the track surface, in which sliding bodies, equipped with various types of entraining mechanisms, are arranged in a sequence and are forced to move by a drive mechanism. The guide system can either consist of a channel set into the roadway or one or more rails. The sliding bodies can either push each other forward if lying loosely or pull one another if connected like a chain.

### Disclosure

### Technical Problem

The present invention is derived to solve the problems, and an object of the present invention is to provide a clearance compensation device for a model car in which even when a clearance between the bottom surface of the model car and one surface of the panel is narrowed or widened due to the shape of the model car or the shape of the runway, the wheels of the model car are constantly in contact with a runway to maintain a rotatable state, thereby simulating the traveling of the model car almost similarly to the actual traveling.

The objects of the present invention are not limited to the aforementioned object, and other objects, which are not mentioned above, will be apparent to a person having ordinary skill in the art from the following description.

### Technical Solution

According to an embodiment of the present invention, there is provided a clearance compensation device according to claim 1, further embodiments are defined in the dependent claims.

### Advantageous Effects

According to the present invention, even when a clearance between the bottom surface of the model car and one surface of the panel narrows or widens due to the shape of the model car or the shape of the runway, the clearance is compensated for so that the magnetic body is constantly in contact with the upper surface of the panel. Accordingly, the magnetic force between the lead member and the magnetic body is maintained constantly by constantly maintaining the clearance between the magnetic body and the lead member, thereby improving the traveling performance of the model car.

In addition, the wheels of the model car are always in contact with the runway to maintain a rotatable state, so that the traveling of the model car may be simulated almost similarly to an actual traveling state, thereby implementing exhibition having higher reality.

Further, the center axes of the magnetic body and the guide part are disposed in different positions to reduce the overall height, or the clearance compensation part moves in a horizontal direction as well as a vertical direction and is implemented to compensate for the clearance to be applied to various types and shapes of model cars to increase the availability and the clearance compensation part automatically compensates for the clearance in the horizontal direction even when the model car passes through the curve zone to enable continuous traveling.

Further, a fastening means is provided to be mutually connected to the guide part and the bottom surface of the model car so that the clearance compensation device for the model car is rapidly detachable from the model car, thereby increasing the convenience of the user.

### Description of Drawings

FIG. 1 is a diagram schematically illustrating a model car traveling system to which a clearance compensation device for the model car according to an embodiment of the present invention is applied.
FIG. 2 is a cross-sectional view schematically illustrating a state where the clearance compensation device for the model car according to an embodiment of the present invention is mounted on the model car to be in contact with a panel.
FIGS. 3 and 4 are diagrams schematically illustrating an appearance where a clearance is compensated through the clearance compensation device for the model car according to an embodiment of the present invention.
FIG. 5 is a cross-sectional view schematically illustrating a state where a clearance compensation device for a model car according to another embodiment of the present invention is mounted on the model car to be in contact with a panel.
FIGS. 6 and 7 are diagrams schematically illustrating an appearance where a clearance is compensated through the clearance compensation device for the model car according to another embodiment of the present invention.
FIG. 8 is a cross-sectional view schematically illustrating a state where a clearance compensation device for a model car according to yet another embodiment of the present invention is mounted on the model car to be in contact with a panel.
FIGS. 9 and 10 are diagrams schematically illustrating an appearance where a clearance is compensated through the clearance compensation device for the model car according to yet another embodiment of the present invention.
FIG. 11 is a diagram schematically illustrating a clearance compensation process when the model car applied with the clearance compensation device for the model car according to yet another embodiment of the present invention passes through a curve zone.
FIG. 12 is a diagram schematically illustrating a state where a fastening means is applied to the clearance compensation device for the model car according to an embodiment of the present invention and the model car.
FIG. 13 is a diagram schematically illustrating a modification of a housing of a clearance compensation part of the clearance compensation device for the model car according to an embodiment of the present invention.
FIG. 14 is a diagram schematically illustrating another modification of the housing of the clearance compensation part of the clearance compensation device for the model car according to an embodiment of the present invention.

### Modes for the Invention

Hereinafter, various embodiments will be described in detail with reference to the accompanying drawings. The embodiments described herein may be variously modified. Specific embodiments are described in the drawings and may be described in detail in the detailed description. It should be understood, however, that the specific embodiments disclosed in the accompanying drawings are intended only to easily understand various embodiments. Accordingly, it is to be understood that the technical idea is not limited by the specific embodiments disclosed in the accompanying drawings, but includes all equivalents or alternatives included within the spirit and scope of the invention.

Terms including an ordinary number, such as first and second, may be used for describing various components, but the components are not limited by the terms. The above terminologies are used only to discriminate one component from the other component.

In the present application, it should be understood that term "including" or "having" indicates that a feature, a number, a step, an operation, a component, a part or the combination thereof described in the specification is present, but does not exclude a possibility of presence or addition of one or more other features, numbers, steps, operations, components, parts or combinations, in advance. It should be understood that, when it is described that a component is "coupled" or "connected" to the other component, the component may be directly coupled or connected to the other component, but there may be anther component therebetween. In contrast, it should be understood that, when it is described that a component is "directly coupled" or "directly connected" to the other component, it should be understood that no component is present therebetween.

Meanwhile, the "module" or "part" for the component used in this specification performs at least one function or operation. In addition, the "module" or "part" may perform a function or operation by hardware, software, or a combination of hardware and software. Also, a plurality of "modules" or a plurality of "parts" except for the "module" or "part" performed in specific hardware or performed in at least one processor may be combined into at least one module. A singular form may include a plural form unless otherwise clearly indicated in the context.

In describing the present disclosure, a detailed explanation of known related technologies may be omitted to avoid unnecessarily obscuring the subject matter of the present disclosure.

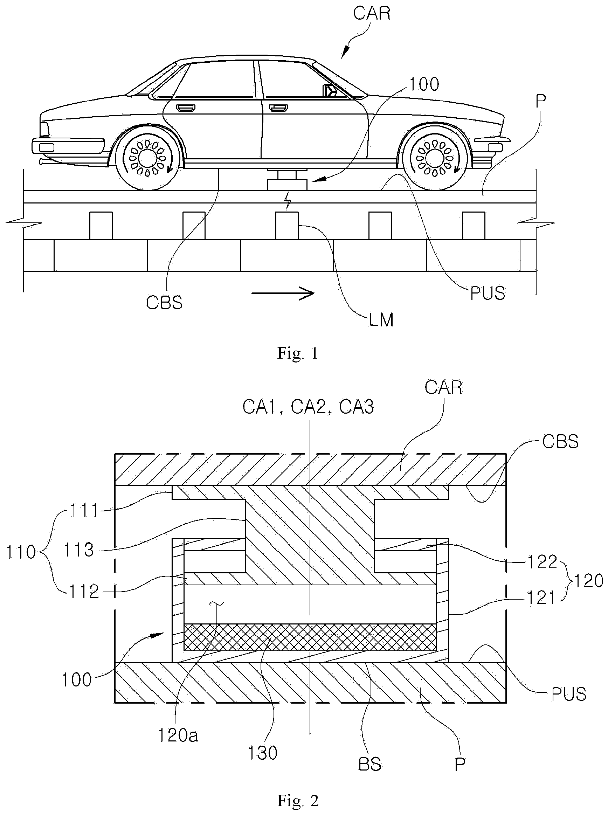

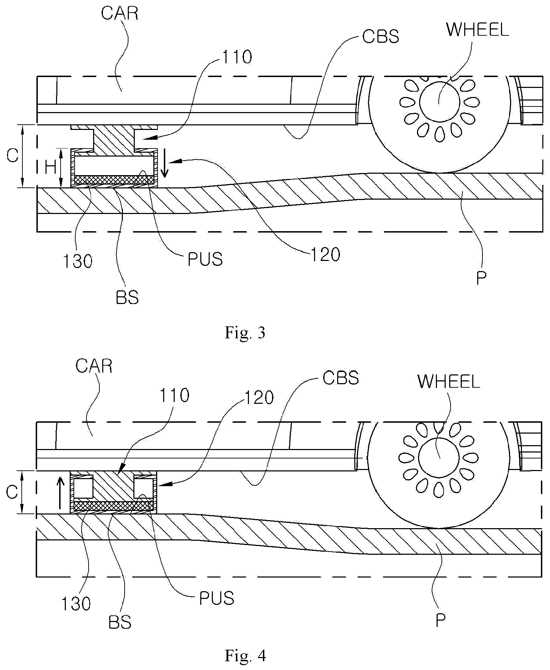

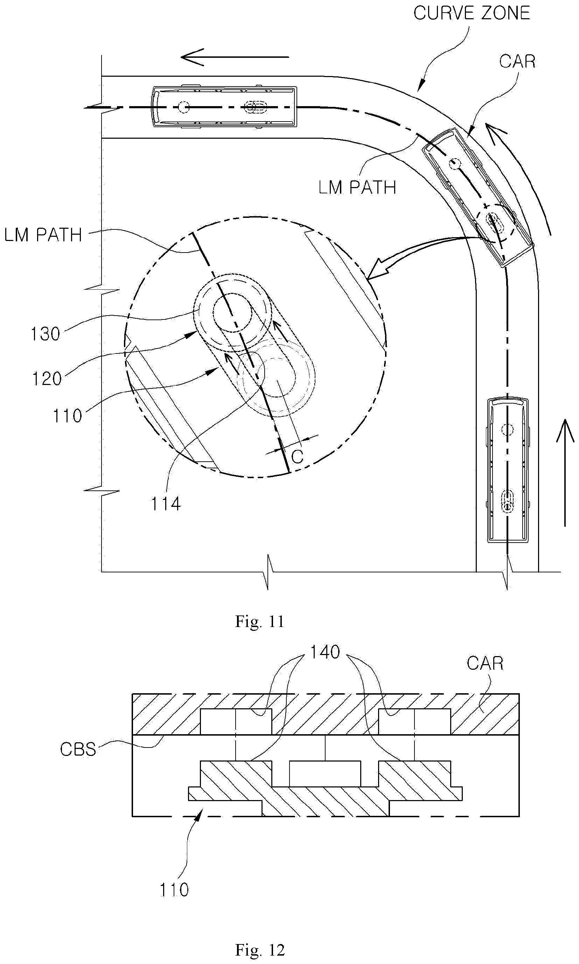

FIG. 1 is a diagram schematically illustrating a model car traveling system to which a clearance compensation device 100 for the model car according to an embodiment of the present invention is applied, FIG. 2 is a cross-sectional view schematically illustrating a state where the clearance compensation device 100 for the model car according to an embodiment of the present invention is mounted on the model car to be in contact with a panel, FIGS. 3 and 4 are diagrams schematically illustrating an appearance where a clearance is compensated through the clearance compensation device 100 for the model car according to an embodiment of the present invention, and FIG. 12 is a diagram schematically illustrating a state where a fastening means 140 is applied to the clearance compensation device 100 for the model car according to an embodiment of the present invention and the model car.

Referring to FIGS. 1 and 2, the clearance compensation device 100 for the model car according to an embodiment of the present invention (hereinafter, referred to as 'the clearance compensation device 100 for the model car') is mounted on a car bottom surface CBS of a model car CAR applied to a model car traveling system to be disposed in contact with a panel upper surface PUS of a panel P. In addition, the clearance compensation device 100 for the model car, as illustrated in FIGS. 3 and 4, compensates for a clearance C through ascending and descending when the clearance C between the car bottom surface CBS of the model car and the panel upper surface PUS of the panel formed with a runway (not illustrated) is widened or narrowed due to a type or shape of the model car, a shape of the runway, or the like. As a result, the clearance compensation device 100 for the model car may be disposed to be constantly in contact with the panel upper surface PUS of the panel, and of course, is provided on the lower side of the panel P to maintain constantly a clearance from a lead member LM which is coupled with the clearance compensation device 100 for the model car through a magnetic force to move the clearance compensation device 100 for the model car.

The clearance compensation device 100 for the model car will be described in more detail.

Referring to FIG. 2, the clearance compensation device 100 for the model car includes a guide part 110 mounted on the car bottom surface CBS of the model car.

The guide part 110 is mounted on the car bottom surface CBS of the model car to support a clearance compensation part 120 to be described below. In addition, a guide rail 113 for guiding the movement of the clearance compensation part 120 along a vertical direction is formed on the guide part 110.

In more detail, the guide part 110 may include a first support plate 111 coupled to the car bottom surface CBS of the model car.

The first support plate 111 is formed in a disk shape having a predetermined thickness, and may be mounted on the car bottom surface CBS of the model car through a fastening means 140 (FIG. 12) to be described below or attached to the car bottom surface CBS of the model car using an adhesive and the like. In addition, the first support plate 111 is in contact with the clearance compensation part 120 at the time of ascending of the clearance compensation part 120 to be described below to limit an ascending length of the clearance compensation part 120 as illustrated in FIGS. 2 and 4.

Further, the guide part 110 may include a second support plate 112 which is disposed to face the first support plate 111 along the vertical direction and supports the clearance compensation part 120 as illustrated in FIGS. 2 and 3.

The second support plate 112 may be formed in the same disk shape as the first support plate 111 and connected to the first support plate 111 through the guide rail 113 to be described below. In addition, the second support plate 112 is accommodated in the inner side of the clearance compensation part 120 to be in contact with the clearance compensation part 120 at the time of descending of the clearance compensation part 120 to limit a descending length of the clearance compensation part 120.

Further, as illustrated in FIGS. 2 to 4, the guide part 110 may include a guide rail 113 which connects the first support plate 111 and the second support plate 112 to each other and guides the movement of the clearance compensation part 120 in a vertical direction.

For example, the guide rail 113 is formed in a circular or polygonal pipe or pole form and may guide the movement of the clearance compensation part 120 by supporting the inner surface in the clearance compensation through an outer surface at the time of ascending of the clearance compensation part 120.

Further, the clearance compensation device 100 for the model car includes the clearance compensation part 120.

Referring to FIGS. 2 to 4, the clearance compensation part 120 ascends along the guide part 110 and compensates for the clearance between the car bottom surface CBS of the model car and the panel upper surface PUS of the panel formed with the runway.

More specifically, the clearance compensation part 120 is mounted on the guide part 110 so as to ascend along the outer surface of the guide part 110. At this time, the bottom surface BS of the clearance compensation part 120 is disposed in contact with the panel upper surface PUS of the panel formed with the runway. Accordingly, when the model car travels, the clearance compensation part 120 ascends along the guide rail 113 in response to the shape of the panel upper surface PUS of the panel and compensates for the clearance C between the car bottom surface CBS of the model car and the panel upper surface PUS of the panel to constantly maintain the bottom surface to be in contact with the panel upper surface PUS of the panel.

For example, the clearance compensation part 120 may include a housing part 121 and a cover part 122.

The housing part 121 may be formed in a container shape having an outer wall and a bottom. Accordingly, a magnetic body 130 may be provided in the inner side of the housing. Here, the magnetic body 130 may be disposed on the lowermost side in the housing part 121 to be adjacent to the lead member LM. Then, the second support plate 112 is accommodated in the inner side of the housing part 121, and an accommodating space 120a flowable in a vertical direction may be formed.

For reference, the height of the accommodating space 120a may correspond to an ascendable height of the clearance compensation part 120. However, the height of the accommodating space 120a and the ascendable height of the clearance compensation part 120 are not necessarily limited, and may be changed and applied with various lengths along the clearance C which may be formed between the car bottom surface CBS of the model car and the panel upper surface PUS of the panel.

The cover part 122 is provided on the upper side of the housing part 121, and may be provided in the guide rail 113 with a hole corresponding to the guide rail 113 therein. Accordingly, the inner surface of the cover part 122 ascends or descends in contact with the outer surface of the clearance compensation part 120 at the time of ascending of the clearance compensation part 120 to guide the movement of the clearance compensation part 120. In addition, as illustrated in FIG. 3, the cover part 122 may be supported on the second support plate 112 of the guide part 110 when the clearance compensation part 120 descends.

Further, the clearance compensation device 100 for the model car includes the magnetic body 130.

Referring to FIGS. 2 to 4, the magnetic body 130 may be provided at the lowermost side of the clearance compensation part 120 to be coupled with the lead member LM provided on the lower side of the panel P through the magnetic force.

For example, the magnetic body 130 and the lead member LM may be formed of a material having a magnetic force such as a permanent magnet. However, the magnetic body 130 and the lead member LM are not necessarily limited thereto, and may be changed and applied to various materials in conditions that perform the same function.

Here, a central axis CA3 of the magnetic body 130 may be coaxially disposed with a central axis CA1 of the guide part 110 and a central axis CA2 of the clearance compensation part 120 as illustrated in FIG. 2.

For example, the clearance compensation device 100 for the model car is formed in the structure in which the central axis CA1 of the guide part 110, the central axis CA2 of the clearance compensation part 120, and the central axis CA3 of the magnetic body 130 coincide with each other, the entire length is elongated. As a result, the clearance compensation device 100 for the model car may be suitable for the model car CAR in which the clearance C between the car bottom surface CBS of the model car and the panel upper surface PUS of the panel is larger than a predetermined reference clearance while the panel upper surface PUS of the panel is planar.

However, the clearance compensation device 100 for the model car is not necessarily limited thereto and may be changed in various forms.

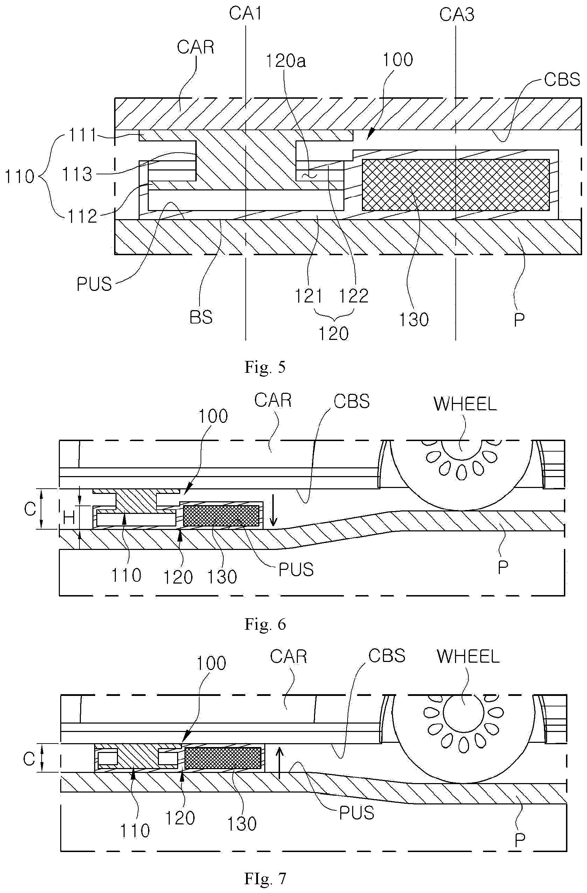

FIG. 5 is a cross-sectional view schematically illustrating a state where a clearance compensation device 100 for a model car according to another embodiment of the present invention is mounted on the model car to be in contact with a panel and FIGS. 6 and 7 are diagrams schematically illustrating an appearance where a clearance is compensated through the clearance compensation device 100 for the model car according to another embodiment of the present invention.

Referring to FIGS. 5 to 7, the clearance compensation device 100 for the model car according to another embodiment of the present invention may be applied in the form suitable for a model car CAR in which a clearance C between a car bottom surface CBS of the model car and a panel upper surface PUS of a panel is smaller than a predetermined reference clearance while the panel upper surface PUS of the panel is planar.

In this case, a central axis CA3 of a magnetic body 130 may be disposed at a position parallel to a central axis CA1 of a guide part 110.

That is, in the clearance compensation device 100 for a model car suitable for the model car CAR in which the clearance C between the car bottom surface CBS of the model car and the panel upper surface PUS of the panel is smaller than the predetermined reference clearance while the panel upper surface PUS of the panel is planar, a clearance compensation part 120 may be formed in a structure with a large planar area so that a magnetic body 130 is disposed at one side of an accommodating space 120a along a horizontal direction.

Accordingly, a height H of the clearance compensation part 120 when the central axis CA3 of the magnetic body 130 is disposed in parallel to the central axis CA1 of the guide part 110 as illustrated in FIGS. 5 and 6 may be smaller than a height H of the clearance compensation part 120 when the central axis CA3 of the magnetic body 130 is disposed coaxially with the central axis CA1 of the guide part 110 as illustrated in FIGS. 2 and 3.

For example, when the central axis CA3 of the magnetic body 130 is disposed in parallel to the central axis CA1 of the guide part 110, the height of the accommodating space 120a formed in a housing part 121 of the clearance compensation part 120 may be formed in a size corresponding to the height of the magnetic body 130 provided on one side of the housing part 121.

Further, the clearance compensation device 100 for the model car may further include a fastening means 140.

Referring to FIG. 12, the fastening means 140 may be formed in a structure to be fastened to the guide part 110 and the car bottom surface CBS of the model car.

For example, the fastening means 140 may be formed in the form of a protrusion and a groove having shapes corresponding to each other so as to selectively detach the guide part 110 from the model car CAR. At this time, a plurality of protrusions and the grooves may be formed to maximize a fastening force during fastening, and of course, may be formed in predetermined pattern shapes so that the fastening force during fastening may uniformly act.

However, the fastening means 140 is not necessarily limited thereto, and may be modified and applied in various forms within a condition of performing the same function.

Hereinafter, a clearance compensation device 100 for a model car according to yet another embodiment of the present invention will be described.

For reference, each configuration for describing a clearance compensation device 100 for the model car according to yet another embodiment of the present invention uses the same reference numeral used for describing the clearance compensation device 100 for the model car for convenience of description, and the same or duplicated description will be omitted.

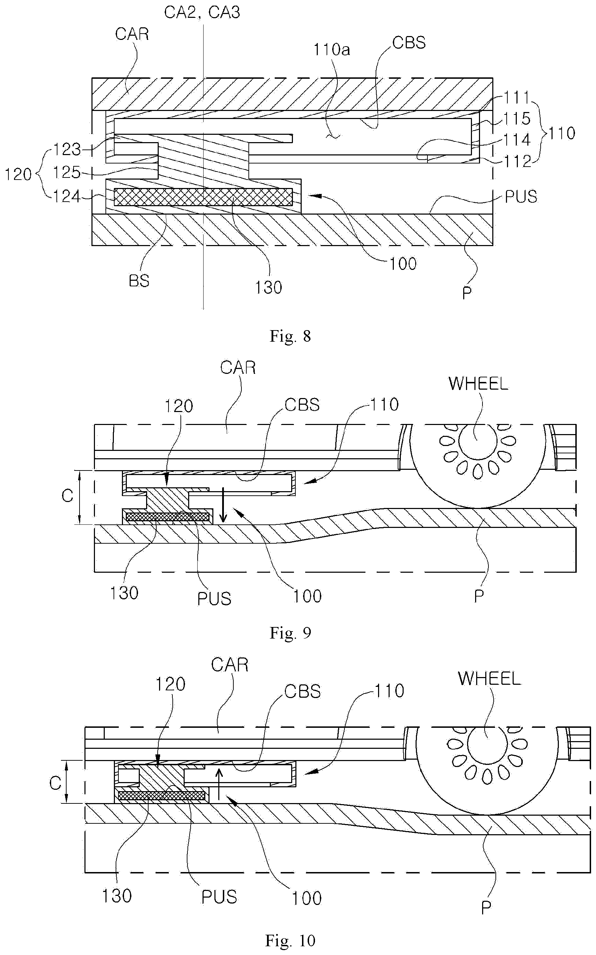

FIG. 8 is a cross-sectional view schematically illustrating a state where a clearance compensation device 100 for a model car according to yet another embodiment of the present invention is mounted on the model car to be in contact with a panel, FIGS. 9 and 10 are diagrams schematically illustrating an appearance where a clearance is compensated through the clearance compensation device 100 for the model car according to yet another embodiment of the present invention, and FIG. 11 is a diagram schematically illustrating a clearance compensation process when the model car applied with the clearance compensation device 100 for the model car according to yet another embodiment of the present invention passes through a curve zone.

Referring to FIGS. 8 to 10, the clearance compensation device 100 for the model car according to yet another embodiment of the present invention includes a guide part 110 mounted on a car bottom surface CBS of a model car.

The guide part 110 is mounted on the car bottom surface CBS of the model car to support a clearance compensation part 120 to be described below. In addition, a guide rail 114 for guiding the movement of the clearance compensation part 120 along a vertical direction and a horizontal direction is formed in the guide part 110.

In more detail, the guide part 110 may include a first support plate 111 coupled to the car bottom surface CBS of the model car.

The first support plate 111 is formed in an elliptical disk shape having a predetermined thickness, and may be mounted on the car bottom surface CBS of the model car through a fastening means 140 to be described below or attached to the car bottom surface CBS of the model car using an adhesive and the like. In addition, the first support plate 111 may be in contact with the clearance compensation part 120 accommodated in the guide part 110 at the time of ascending of the clearance compensation part 120 to be described below to limit an ascending length of the clearance compensation part 120.

Further, the guide part 110 may include a second support plate 112 which is disposed to face the first support plate 111 along the vertical direction and supports the clearance compensation part 120.

The second support plate 112 may be formed in the same shape as the first support plate 111 and connected with the first support plate 111 through a circumferential plate 115 to be described below. In addition, a part of the clearance compensation part 120 is accommodated in the second support plate 112, and a long hole-shaped guide groove 114 for guiding the clearance compensation part 120 in the vertical and horizontal directions may be formed. Therefore, the second support plate 112 is in contact with the clearance compensation part 120 which is accommodated in the inside of the guide part 110 at the time of descending of the clearance compensation part 120 or the horizontal movement of the clearance compensation part 120 to limit a descending length of the clearance compensation part 120 and a horizontal moving distance of the clearance compensation part 120.

For example, the guide groove 114 is formed to support the outer surface of a third moving support part 125 of the clearance compensation part 120 to be described below, and the third moving support part 125 of the clearance compensation part 120 may be formed in a long hole shape to be movable in the horizontal direction.

Further, the guide part 110 may include a circumferential plate 115 which is disposed around the first support plate 111 and the second support plate 112 to connect the first support plate 111 and the second support plate 112 to each other.

The circumferential plate 115 is disposed around the first support plate 111 and the second support plate 112 to connect the first support plate 111 and the second support plate 112 to each other, the guide groove 114 communicates between the first support plate 111 and the second support plate 112, and a part of the clearance compensation part 120 is accommodated to form an accommodating space 110a flowable in horizontal and vertical directions.

Further, the clearance compensation device 100 for the model car according to yet another embodiment of the present invention includes the clearance compensation part 120.

Referring to FIGS. 8 to 10, the clearance compensation part 120 ascends along the guide groove 114 and compensates for the clearance C between the car bottom surface CBS of the model car and the panel upper surface PUS of the panel formed with the runway.

More specifically, the clearance compensation part 120 is provided on the guide part 110 and ascends along the guide groove 114 in response to the shape of the panel upper surface PUS of the panel when the model car CAR travels, and compensates for the clearance C between the car bottom surface CBS of the model car and the panel upper surface PUS of the panel to constantly maintain the bottom surface to be in contact with the panel upper surface PUS of the panel. At this time, the bottom surface BS of the clearance compensation part 120 is disposed in contact with the panel upper surface PUS of the panel formed with the runway.

Further, referring to FIG. 11, the clearance compensation part 120 horizontally moves along the guide groove 114 through the magnetic body 130 to be described below provided therein and compensates for the clearance C between the lead member LM and the magnetic body 130 on the plane.

More specifically, the clearance compensation part 120 provided on the guide part 110 deviates from a moving path LM PATH of the lead member LM when the model car CAR passes through a curve zone. Therefore, between the lead member LM and the clearance compensation part 120, a clearance C with a predetermined size is generated on the plane. At this time, the magnetic body 130 provided on the inner side of the clearance compensation part 120 presses the clearance compensation part 120 to the lead member LM by the magnetic force of the lead member LM, and as a result, the clearance compensation part 120 pressed by the magnetic body 130 horizontally moves along the long-hole shaped guide groove 114 and compensates for the clearance C between the lead member LM and the magnetic body 130. Accordingly, the magnetic body 130 provided on the inner side of the clearance compensation part 120 constantly maintains a coupling force with the lead member LM. At this time, the bottom surface BS of the clearance compensation part 120 is disposed in contact with the panel upper surface PUS of the panel formed with the runway.

Referring to FIGS. 8 to 10, the clearance compensation part 120 may include a first moving support 123, a second moving support 124, and a third moving support 125.

The first moving support 123 is accommodated in the accommodating space 110a of the guide part 110 and is in contact with the first support plate 111 at the time of ascending of the clearance compensation part 120 as illustrated in FIG. 10 to limit an ascending length of the clearance compensation part 120 and in contact with the second support plate 112 at the time of descending of the clearance compensation part 120 as illustrated in FIG. 9 to limit a descending length of the clearance compensation part 120.

For reference, the height of the accommodating space 110a may correspond to an ascendable height of the clearance compensation part 120. However, the height of the accommodating space 110a and the ascendable height of the clearance compensation part 120 are not necessarily limited, and may be changed and applied with various lengths along the clearance C which may be formed between the car bottom surface CBS of the model car and the panel upper surface PUS of the panel.

Referring back to FIGS. 8 and 10, the second moving support 124 is disposed to face the first moving support 123 along the vertical direction so that the bottom surface may be disposed in contact with the panel upper surface PUS of the panel. The second moving support 124 is formed in the form of a housing of which a predetermined space is formed inside, and the magnetic body 130 may be accommodated in the inner side of the second moving support 124.

The third moving support 125 is accommodated in the guide groove 114 to connect the first moving support 123 and the second moving support 124 to each other, and is pressed from the second moving support 124 accommodating the magnetic body 130 at the time of moving of the magnetic body 130 to be moved in vertical and horizontal directions along the guide groove 114.

That is, the clearance compensation device 100 for the model car according to yet another embodiment of the present invention is configured to move horizontally along the guide groove 114 in the plane as described above and compensate for the clearance C between the lead member LM and the magnetic body 130. Accordingly, it is preferred to be applied to a model car such as a bus, a truck, and the like which may be the clearance C between the lead member LM and the magnetic body 130 due to a long length when the model car passes through a corner zone. At this time, the clearance compensation device 100 for the model car may be further included in the model car such as a bus, a truck, and the like.

Further, the clearance compensation device 100 for the model car according to yet another embodiment of the present invention includes the magnetic body 130.

Referring to FIGS. 8 to 10, the magnetic body 130 may be provided at the clearance compensation part 120 and disposed at the lowermost side of the clearance compensation part 120 and coupled with the lead member LM provided on the lower side of the panel P through the magnetic force.

For example, both the magnetic body 130 and the lead member LM may be formed of a material having a magnetic force such as a permanent magnet. However, the magnetic body 130 and the lead member LM are not necessarily limited thereto, and may be changed and applied to various materials in conditions that perform the same function.

Here, a central axis CA3 of the magnetic body 130 may be disposed coaxially with a central axis CA2 of the clearance compensation part 120 as illustrated in FIG. 8.

As a result, the clearance compensation device 100 for the model car is formed in a structure having an entirely long length to be applied to a model car in which the clearance C between the car bottom surface CBS of the model car and the panel upper surface PUS of the panel is larger than a predetermined reference clearance while the panel upper surface PUS of the panel is planar.

Further, the clearance compensation device 100 for the model car according to yet another embodiment of the present invention may further include a fastening means 140.

Referring to FIG. 12, the fastening means 140 may be formed in a structure to be fastened to the guide part 110 and the car bottom surface CBS of the model car.

For example, the fastening means 140 may be formed in the form of a protrusion and a groove having shapes corresponding to each other so as to selectively detach the guide part 110 from the model car CAR. At this time, a plurality of protrusions and the grooves may be formed to maximize a fastening force during fastening, and of course, may be formed in predetermined pattern shapes so that the fastening force during fastening may uniformly act.

However, the fastening means 140 is not necessarily limited thereto, and may be modified and applied in various forms within a condition of performing the same function.

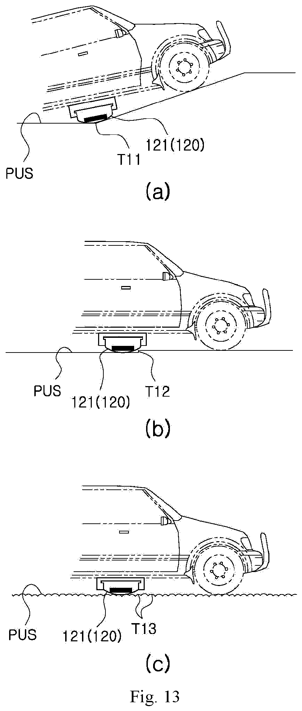

Further, the clearance compensation device 100 for the model car according to yet another embodiment of the present invention is the same as the embodiment described above except for the shape of the bottom surface of the housing 121 of the clearance compensation part 120 as illustrated in FIG. 13, and thus, hereinafter, it will be mainly described in detail.

In order to express a surface of an actual road, the panel upper surface PUS of the panel P may also have a transition zone T11 bent forward and backward of a slope zone as illustrated in FIG. 13A, may also have a step zone T12 with a different height as illustrated in FIG. 13B, and may also have a zone T13 with a plurality of protrusions which is an unpaved road as illustrated in FIG. 13C. In this case, when the bottom surface of the housing 121 of the clearance compensation part 120 is a flat surface as the embodiments described above, the detaching degree of the bottom surface may be increased in the transition zone T11 of the panel upper surface PUS of the panel P and the bottom surface may be caught in the step zone T12 or the protrusion zone T13 of the panel upper surface PUS of the panel P. Accordingly, as illustrated in FIG. 13, when the bottom surface of the housing 121 of the clearance compensation part 120 is a convex surface [a convex surface toward the panel upper surface PUS of the panel P], the detaching degree of the bottom surface may be decreased in the transition zone T11 of the panel upper surface PUS of the panel P and the bottom surface may be prevented from being caught in the step zone T12 or the protrusion zone T13 of the panel upper surface PUS of the panel P.

Meanwhile, it will be natural that the technology of having the bottom surface of the housing 121 of the clearance compensation part 120 as the convex surface can be applied to other embodiments as well as the embodiment of the present invention described above.

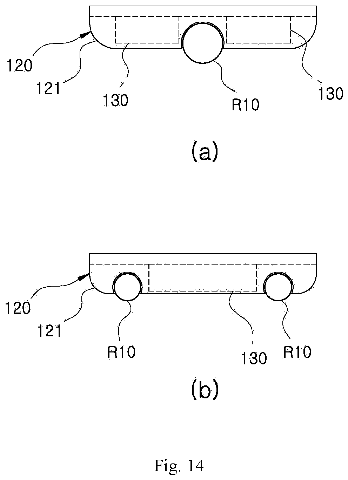

Further, the clearance compensation device 100 for the model car according to yet another embodiment of the present invention is the same as the embodiment described above except for the shape of the bottom surface of the housing 121 of the clearance compensation part 120 as illustrated in FIG. 14, and thus, hereinafter, it will be mainly described in detail.

As illustrated in FIG. 14, when an edge of the bottom surface of the housing 121 of the clearance compensation part 120 has an arc shape, the detaching degree of the bottom surface may be decreased in the transition zone T11 of the panel upper surface PUS of the panel P and the bottom surface may be prevented from being caught in the step zone T12 or the protrusion zone T13 of the panel upper surface PUS of the panel P.

Meanwhile, it will be natural that the technology of having the edge of bottom surface of the housing 121 of the clearance compensation part 120 as the arc shape can be applied to other embodiments as well as the embodiment of the present invention described above.

Further, the clearance compensation device 100 for the model car according to yet another embodiment of the present invention is the same as the embodiment described above except that a rotary body R10 for preventing friction is provided on the bottom surface of the housing 121 of the clearance compensation part 120 as illustrated in FIG. 14, and thus, hereinafter, it will be mainly described in detail.

As illustrated in FIG. 14, when the rotary body R10 for preventing friction is rotatably provided on the bottom surface of the housing 121 of the clearance compensation part 120, the friction with the panel upper surface PUS of the panel P may be reduced while moving the panel upper surface PUS of the panel P and ultimately, the abrasion of the panel upper surface PUS of the panel P and the bottom surface of the housing 121 may be minimized. As an example, as illustrated in FIG. 14A, when the rotary body R10 for preventing friction is provided at a center of the bottom surface of the housing 121 of the clearance compensation part 120, the magnetic bodies 130 may be provided at a first half and a second half based on the rotary body R10 for preventing friction, respectively. As another example, as illustrated in FIG. 14B, when the rotary bodies R10 for preventing friction are provided at a first half and a second half of the bottom surface of the housing 121 of the clearance compensation part 120, respectively, the magnetic body 130 may be provided therebetween.

In particular, the number of rotary bodies R10 for preventing friction may be determined in proportion to a load applied thereto. That is, when the load is relatively large, a large number of rotary bodies R10 for preventing friction (see R10 of FIG. 14B) may be mounted in proportional thereto and when the load is relatively small, a few number of rotary bodies R10 for preventing friction (see R10 of FIG. 14A) may be mounted in proportional thereto. Further, as the rotary body R10 for preventing friction, a wheel, a castor, a cylindrical rotary body (e.g., a roller, etc.), a spherical rotary body (e.g., a ball, a bead, etc.), or the like may be used.

Meanwhile, it will be natural that the technology of having the bottom surface of the housing 121 of the clearance compensation part 120 as the rotary body R10 for preventing friction can be applied to other embodiments as well as the embodiment of the present invention described above.

As such, according to the embodiment of the present invention, even when the clearance C between the car bottom surface CBS of the model car and the panel upper surface PUS of the panel is narrowed or widened due to the shape of the model car CAR or the shape of the runway, the clearance C is compensated so that the magnetic body 130 is disposed constantly in contact with the panel upper surface PUS of the panel. Accordingly, the magnetic force between the lead member LM and the magnetic body 130 is constantly maintained by constantly maintaining the clearance between the magnetic body 130 and the lead member LM, thereby improving the traveling performance of the model car CAR.

In addition, the wheels of the model car CAR are always in contact with the runway to maintain a rotatable state, so that the traveling of the model car CAR may be simulated almost similarly to an actual traveling state, thereby implementing exhibition having higher reality.

Further, the center axes of the magnetic body 130 and the guide part 110 are disposed in different positions to reduce the overall height, or the clearance compensation part 120 moves in a horizontal direction as well as a vertical direction and is implemented to compensate for the clearance C to be applied to various types and shapes of model cars to increase the availability and the clearance compensation part 120 automatically compensates for the clearance C in the horizontal direction even when the model car passes through the curve zone to enable continuous traveling.

Further, the fastening means 140 is provided to be mutually fastened to the guide part 110 and the car bottom surface CBS of the model car, so that the clearance compensation device 100 for the model car is rapidly detachable from the model car, thereby increasing the convenience of the user.

While the embodiments of the present invention have been illustrated and described above, the present invention is not limited to the aforementioned specific embodiments, various modifications may be made by a person with ordinary skill in the technical field. The scope of the invention is defined by the appended claims.

### Industrial Applicability

According to an embodiment of the present invention, a magnetic force between a lead member and a magnetic body is constantly maintained to improve the traveling performance of a model car and simulate the traveling of the model car almost similarly to actual traveling, thereby implementing exhibition with higher reality, and thus the present invention will have industrial applicability.

## Claims

1. A clearance compensation device (100) for a model car of the type which travels by magnetic force following a lead member (LM), the device (100) comprising: a guide part (110) having a guide rail (113) formed along the vertical direction, and a magnetic body (130), wherein the guide part (110) is mountable on the bottom surface (CBS) of the model car; and the device (100) further comprises a clearance compensation part (120) which is provided on the guide part (110), said clearance compensation part (120) has a bottom surface (BS) that, in use, is in contact with the upper surface (PUS) of a panel having a runway formed thereon on which said model car travels, said clearance compensation part (120) ascends and descends along the guide rail (113) in response to the shape of the upper surface (PUS) of the panel when the model car travels, and is configured to compensate for a clearance (C) between the bottom surface (CBS) of the model car and the upper surface (PUS) of the panel so that the bottom surface (CBS) is constantly in contact with the upper surface (PUS) of the panel; and a magnetic body (130) is provided in the clearance compensation part (120) to be coupled with the lead member (LM) with the panel there between.

2. The clearance compensation device of claim 1, wherein the guide part comprises
a first support plate (111) which is coupled to the bottom surface (CBS) of the model car and in contact with the clearance compensation part (120) during ascending of the clearance compensation part (120) to limit an ascending length of the clearance compensation part (120);
a second support plate (112) which is disposed to face the first support plate (111) along a vertical direction and accommodated in the clearance compensation part (120) to be in contact with the clearance compensation part (120) during descending of the clearance compensation part (120) to limit a descending length of the clearance compensation part (120); and
a guide rail (113) which connects the first support plate (111) and the second support plate (112) to each other to guide the movement of the clearance compensation part (120) in a vertical direction.

3. The clearance compensation device of claim 2, wherein the clearance compensation part (120) comprises
a housing part (121) in which the magnetic body (130) is provided and the second support plate (112) is accommodated therein to form an accommodating space (120a) flowable in a vertical direction; and
a cover part (122) which is provided at the upper side of the housing part (121) to be provided on the guide rail (113) and is designed to be caught and supported on the second support plate (112) when the clearance compensation part (120) ascends.

## Patentansprüche

1. Spielraum-Ausgleichsvorrichtung (100) für ein Modellauto einer Art, das sich mittels Magnetkraft fortbewegt, indem es einem Führungselement (FE) folgt, wobei die Vorrichtung (100) die folgenden Bestandteile umfasst: ein Führungsteil (110) mit einer vertikal verlaufenden Führungsschiene (113) und einen Magnetkörper (130), wobei das Führungsteil (110) an der Bodenfläche (BFA) des Modellautos montierbar ist. Die Vorrichtung (100) umfasst ferner ein Spielraum-Ausgleichselement (120), das auf dem Führungsteil (110) angebracht ist, wobei das Spielraum-Ausgleichselement (120) eine Bodenfläche (BF) aufweist, die während des Betriebs in Kontakt mit der oberen Fläche (OFP) einer Platte steht, auf der sich eine Fahrbahn befindet und auf der sich das Modellauto bewegt. Das genannte Spielraum-Ausgleichselement (120) hebt und senkt sich entlang der Führungsschiene (113) in Abhängigkeit von der Form der oberen Fläche (OFP) der Platte, wenn das Modellauto sich bewegt, und ist so beschaffen, dass es den Spielraum (S) zwischen der Bodenfläche (BFA) des Modellautos und der oberen Fläche (OFP) der Platte ausgleicht, so dass die Bodenfläche (BFA) ständig in Kontakt mit der oberen Fläche (OFP) der Platte ist. In dem Spielraum-Ausgleichselement (120) ist ein Magnetkörper (130) vorgesehen, um mit dem Führungselement (FE) mit der Platte dazwischen gekoppelt zu werden.

2. Spielraum-Ausgleichsvorrichtung gemäß Patentanspruch 1, wobei das Führungsteil eine erste Stützplatte (111) enthält, die mit der Bodenfläche (BFA) des Modellautos gekoppelt ist und mit dem Spielraum-Ausgleichselement (120), wenn sich dieses anhebt, in Kontakt ist, um eine Steigungslänge des Spielraum-Ausgleichselements (120) zu begrenzen, ferner eine zweite Stützplatte (112) enthält, die so angeordnet ist, dass sie der ersten Stützplatte (111) vertikal gegenüberliegt, und die in dem Spielraum-Ausgleichselement (120) untergebracht ist, um eine Absenklänge des Spielraum-Ausgleichselements (120) zu begrenzen, wenn sich dieses absenkt, sowie eine Führungsschiene (113), die die erste Stützplatte (111) und die zweite Stützplatte (112) miteinander verbindet, um die Bewegung des Spielraum-Ausgleichselements (120) vertikal zu führen.

3. Spielraum-Ausgleichsvorrichtung gemäß Patentanspruch 2, wobei das Spielraum-Ausgleichselement (120) ein Gehäuseteil (121) umfasst, in dem der Magnetkörper (130) und die zweite Stützplatte (112) untergebracht sind, um einen Aufnahmeraum (120a) zu bilden, der vertikal fließfähig ist, ferner ein Abdeckteil (122) an der Oberseite des Gehäuseteils (121) beinhaltet, um an der Führungsschiene (113) angebracht zu werden, und das so ausgelegt ist, dass es an der zweiten Trägerplatte (112) gefangen und gehalten wird, wenn das Spielraum-Ausgleichselement (120) sich anhebt.

## Revendications

1. Dispositif de compensation de jeu (100) destiné à une voiture miniature du type qui se déplace par une force magnétique en suivant un élément directeur (LM), le dispositif (100) comprenant : une pièce de guidage (110) ayant un rail de guidage (113) formé le long de la direction verticale, et un corps magnétique (130), dans lequel la pièce de guidage (110) peut être montée sur la surface inférieure (CBS) de la voiture miniature ; et le dispositif (100) comprend en outre une pièce de compensation de jeu (120) qui est fournie sur la pièce de guidage (110), ladite pièce de compensation de jeu (120) a une surface inférieure (BS) qui, en cours d'utilisation, est en contact avec la surface supérieure (PUS) d'un panneau ayant une piste formée sur celui-ci sur laquelle ladite voiture miniature se déplace, ladite pièce de compensation de jeu (120) monte et descend le long du rail de guidage (113) en réponse à la forme de la surface supérieure (PUS) du panneau lorsque la voiture miniature se déplace, et est conçue pour compenser un jeu (C) entre la surface inférieure (CBS) de la voiture miniature et la surface supérieure (PUS) du panneau de sorte que la surface inférieure (CBS) est constamment en contact avec la surface supérieure (PUS) du panneau ; et un corps magnétique (130) est fourni dans la pièce de compensation de jeu (120) pour être accouplé à l'élément directeur (LM) avec le panneau entre eux.

2. Dispositif de compensation de jeu selon la revendication 1, dans lequel la pièce de guidage comprend
une première plaque de support (111) qui est accouplée à la surface inférieure (CBS) de la voiture miniature et en contact avec la pièce de compensation de jeu (120) pendant la montée de la pièce de compensation de jeu (120) pour limiter une longueur de montée de la pièce de compensation de jeu (120) ;
une seconde plaque de support (112) qui est disposée pour faire face à la première plaque de support (111) le long d'une direction verticale et reçue dans la pièce de compensation de jeu (120) pour être en contact avec la pièce de compensation de jeu (120) pendant la descente de la pièce de compensation de jeu (120) pour limiter une longueur de descente de la pièce de compensation de jeu (120) ; et
un rail de guidage (113) qui relie la première plaque de support (111) et la seconde plaque de support (112) l'une à l'autre pour guider le mouvement de la pièce de compensation de jeu (120) dans une direction verticale.

3. Dispositif de compensation de jeu selon la revendication 2, dans lequel la pièce de compensation de jeu (120) comprend
une pièce de logement (121) dans laquelle le corps magnétique (130) est fourni et la seconde plaque de support (112) est reçue à l'intérieur de celle-ci pour former un espace de réception (120a) mobile dans une direction verticale ; et
une pièce de couverture (122) qui est fournie au niveau du côté supérieur de la pièce de logement (121) à fournir sur le rail de guidage (113) et est destinée à être capturée et supportée sur la seconde plaque de support (112) lorsque la pièce de compensation de jeu (120) monte.
